# EUROPEAN PATENT SPECIFICATION

(11) **EP 3 146 184 B1**
(45) Date of publication and mention of the grant of the patent: **07.03.2018**
(21) Application number: 14736073.9
(22) Date of filing: 21.05.2014
(51) Int. Cl.: F02C 9/18, F02C 6/08

(54) **METHOD OF PROVIDING A COOLING FLOW FROM A COMPRESSOR TO A TURBINE IN A GAS TURBINE ENGINE**
VERFAHREN ZUR BEREITSTELLUNG EINES KÜHLUNGSSTROMS VON EINEM VERDICHTER ZU EINER TURBINE IN EINEM GASTURBINENMOTOR
MÉTHODE POUR FOURNIR UN ÉCOULEMENT DE REFROIDISSEMENT D'UN COMPRESSEUR À UNE TURBINE DANS UNE TURBINE À GAZ

(43) Date of publication of application: 29.03.2017
(73) Proprietor: Siemens Energy, Inc., Orlando, FL 32826-2399 (US)
(72) Inventor: LITTLE, David A., Mount Dora Florida 32757 (US)
(74) Representative: Isarpatent
(86) International application number: PCT/US2014/038872
(87) International publication number: WO 2015/178897

(56) References cited:
- US-A1- 2009 104 020
- US-A1- 2012 117 977
- US-B1- 6 615 574

## Description

### FIELD OF THE INVENTION

The present invention is generally related to improving the efficiency of gas turbine engines and, more particularly, to providing an efficient use of bleed air for cooling turbine components.

### BACKGROUND OF THE INVENTION

In high temperature gas turbines, air is bled from the compressor and supplied externally to stages in the turbine to provide cooling and sealing air. To minimize the power consumption associated with compressing air and to provide the air to the turbine stages at the minimum temperature possible, the standard approach is to provide a separate bleed for each turbine stage. The first turbine stage is cooled from the combustor shell so bleeds are for downstream stages only. US 6 615 574 B1 discloses a method of providing a cooling flow from a compressor to a turbine in a gas turbine engine.

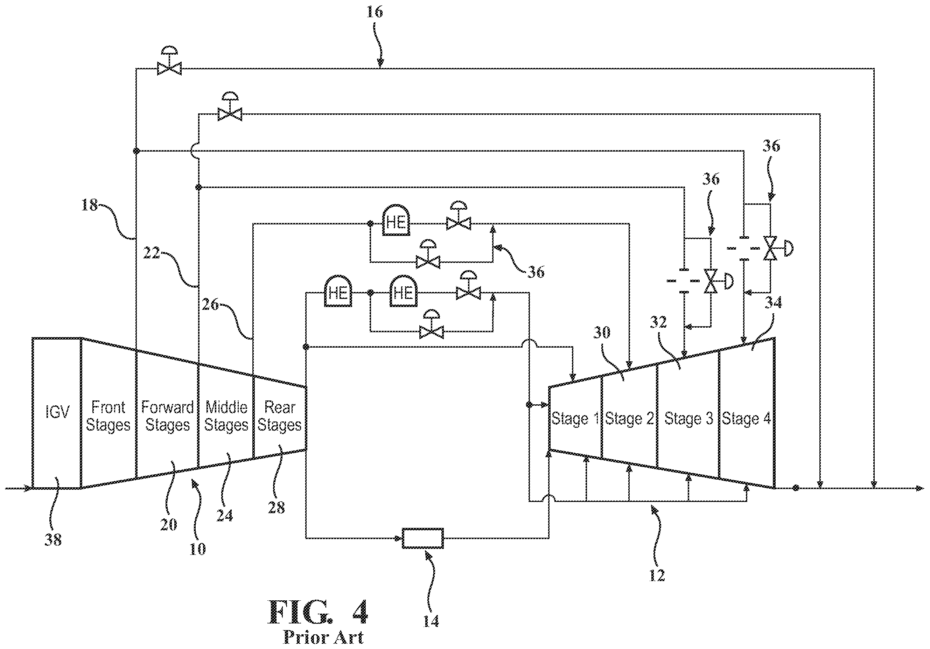

Referring to Fig. 4, a schematic of an industrial gas turbine is shown and includes a compressor 10, a turbine 12, a combustor 14 and a typical secondary air system 16. The combustor 14 receives compressed air from the compressor 10 and combusts the air with a fuel to produce a hot working gas that is provided to the turbine 12. The secondary air system comprises external bleeds for providing cooling air from the compressor 10 to the turbine 12. The external bleeds include a low pressure bleed 18 that extracts air from a location near a forward stage 20 of the compressor 10, an intermediate bleed 22 that extracts air from near a middle stage 24 of the compressor, and a high pressure bleed 26 that extracts air from near a rear stage 28 of the compressor 10. The low, intermediate and high pressure bleeds 18, 22, 26 provide cooling air flow to a fourth turbine stage 34, a third turbine stage 32 and a second turbine stage 30, respectively. Modulation circuits 36, typically including modulation valves, are also provided to modulate (throttle) the cooling air flow through each of the pressure bleeds 18, 22, 26.

The choice of the compressor stage from which the air needs to be extracted is set by the worst condition, described as when the pressure ratio between the compressor bleed source and the turbine stage sink is minimum. This usually occurs at part load in cold weather, typically at 60% load and -20F. During worst condition operation, the compressor inlet guide vanes (IGVs) 38 (Fig. 4), and any compressor variable guide vanes, are closed which reduces the pressure rise in stage 1 of the compressor 10, as well as in subsequent stages with variable vanes. This causes the source pressures at the bleeds 18, 22, 26 on the compressor to decrease. However, the pressure ratios of the first three stages of the turbine 12 change little as load is decreased. At all other conditions, for example base load, the modulation valves in bypass circuits associated with the compressor bleeds can be activated to minimize the amount of bleed air required. The cooling air requirement supplied by the bleed air can be a function of pressure in the vane supply cavity and/or the disc cavity temperatures.

Although the flow may be controlled to prevent excess bleed air being used, the process of reducing flow by introducing pressure loss in the external bleed circuits is inefficient. The compressor does work in compressing air to the bleed location and the valve in the bleed supply line throws that work away.

### SUMMARY OF THE INVENTION

The present invention provides a method according to claim 1.

In accordance with the present invention, a method is described for providing a cooling flow from a compressor to a turbine in a gas turbine engine. The method comprises the steps of providing a first cooling air flow from the compressor, through a first ejector, to a stage of the turbine, providing a second cooling air flow from the compressor, through a second ejector, to another stage of the turbine and providing a third cooling air flow from the compressor, through a third ejector, to a further stage of the turbine. The first ejector combines a first bleed air flow extracted from the compressor with a lower pressure air flow extracted from the compressor to form the first cooling air flow, and the second ejector combines a second bleed air flow extracted from the compressor with a secondary portion extracted from the first bleed air flow to form the second cooling air flow.

The third ejector can combine a third bleed air flow extracted from the compressor with a secondary portion extracted from the second bleed air flow to form the third cooling air flow.

The first, second and third bleed air flows can be extracted from successive downstream locations on the compressor.

The first, second and third cooling air flows can be provided to successive upstream locations on the turbine.

The first, second and third bleed air flows from the compressor to the first, second and third ejectors, respectively, can be unthrottled flows throughout all operating conditions of the engine.

The first, second and third cooling air flows from the respective first, second and third ejectors to the turbine can be unthrottled flows throughout all operating conditions of the engine.

The lower pressure air flow, the secondary portion extracted from the first bleed air flow and the secondary portion extracted from the second bleed air flow from the compressor to the first, second and third ejectors, respectively, can each be variably throttled flows.

The first and second bleed air flows from the compressor to the first and second ejectors, respectively, can be unthrottled flows throughout all operating conditions of the engine.

The first and second cooling air flows from the respective first and second ejectors to the turbine can be unthrottled flows throughout all operating conditions of the engine.

The lower pressure air flow and the secondary portion extracted from the first bleed air flow from the compressor to the first and second ejectors, respectively, can each be variably throttled flows.

In accordance with another aspect of the invention, a system is described for providing cooling from a compressor to plural stages of a turbine in a gas turbine engine. The system comprises a first ejector having primary and secondary fluid inlets receiving bleed air from the compressor, and having an outlet connected to a first cooling air flow line for conducting a first cooling air flow to a stage of the turbine, and a second ejector having primary and secondary fluid inlets receiving bleed air from the compressor, and having an outlet connected to a second cooling air flow line for conducting a second cooling air flow to another stage of the turbine. A first bleed air line conducts air extracted from the compressor to the primary inlet of the first ejector, and a first secondary air line conducts air extracted from the compressor upstream from the first bleed air line to the secondary inlet of the first ejector. A second bleed air line conducts air extracted from the compressor to the primary inlet of the second ejector, and a second secondary air line conducts air extracted from the first bleed air line to the secondary inlet of the second ejector.

A third bleed air line is provided for conducting air extracted from the compressor to a primary inlet of a third ejector, the third ejector having an outlet connected to a third cooling air flow line for conducting a third cooling air flow to a further stage of the turbine. A third secondary air line can conduct air extracted from the second bleed air line to a secondary inlet of the third ejector.

The first, second and third bleed air lines can extract air from successive downstream locations on the compressor.

The first, second and third cooling air lines can provide cooling air to successive upstream locations on the turbine.

Each of the first secondary air line, the second secondary air line and the third secondary air line can include a valve for variably throttling flow to the first, second and third ejectors, respectively, and the bleed air lines and cooling air flow lines can be each configured without any valves to vary the flow of air.

In accordance with a further aspect of the invention, a system is described for providing cooling from a compressor to plural stages of a turbine in a gas turbine engine. The system comprises a first ejector having primary and secondary fluid inlets receiving bleed air from the compressor, and having an outlet connected to a first cooling air flow line for conducting a first cooling air flow to a fourth stage of the turbine. The system additionally includes a second ejector having primary and secondary fluid inlets receiving bleed air from the compressor, and having an outlet connected to a second cooling air flow line for conducting a second cooling air flow to a third stage of the turbine. The system further includes a third ejector having primary and secondary fluid inlets receiving bleed air from the compressor, and having an outlet connected to a third cooling air flow line for conducting a second cooling air flow to a second stage of the turbine. A first bleed air line conducts air extracted from the compressor to the primary inlet of the first ejector, and a first secondary air line conducts air extracted from the compressor upstream from the first bleed air line to the secondary inlet of the first ejector. A second bleed air line conducts air extracted from the compressor to the primary inlet of the second ejector, and a second secondary air line conducts air extracted from the first bleed air line to the secondary inlet of the second ejector. A third bleed air line conducts air extracted from the compressor to the primary inlet of the third ejector, and a third secondary air line conducts air extracted from the second bleed air line to the secondary inlet of the third ejector.

Each of the first secondary air line, the second secondary air line and the third secondary air line can include a valve for variably throttling flow to the first, second and third ejectors, respectively, and the bleed air lines and cooling air flow lines can be each configured without any valves to vary the flow of air.

### BRIEF DESCRIPTION OF THE DRAWINGS

While the specification concludes with claims particularly pointing out and distinctly claiming the present invention, it is believed that the present invention will be better understood from the following description in conjunction with the accompanying Drawing Figures, in which like reference numerals identify like elements, and wherein:
Fig. 1 is a diagrammatic view of a configuration of the present invention incorporated in a turbine engine;
Fig. 2 is a cross-sectional view illustrating a constant-area ejector that can be incorporated in the present invention;
Fig. 3 is a plot illustrating compression ratio vs. entrainment ratio for a constant-area ejector; and
Fig. 4 is a diagrammatic view of a turbine engine incorporating a known cooling system.

### DETAILED DESCRIPTION OF THE INVENTION

In the following detailed description of the preferred embodiment, reference is made to the accompanying drawings that form a part hereof, and in which is shown by way of illustration, and not by way of limitation, a specific preferred embodiment in which the invention may be practiced. It is to be understood that other embodiments may be utilized and that changes may be made without departing from the spirit and scope of the present invention.

In accordance with an aspect of the present invention, a method and system is provided for providing cooling from a compressor to stages of a turbine in a gas turbine engine. In accordance with a particular aspect, the cooling system can extract cooling air from existing bleed air port locations on a compressor, such as is shown in Fig. 4, and provide a flow of cooling air to existing ports on the turbine, supplying secondary cooling air to components within the turbine.

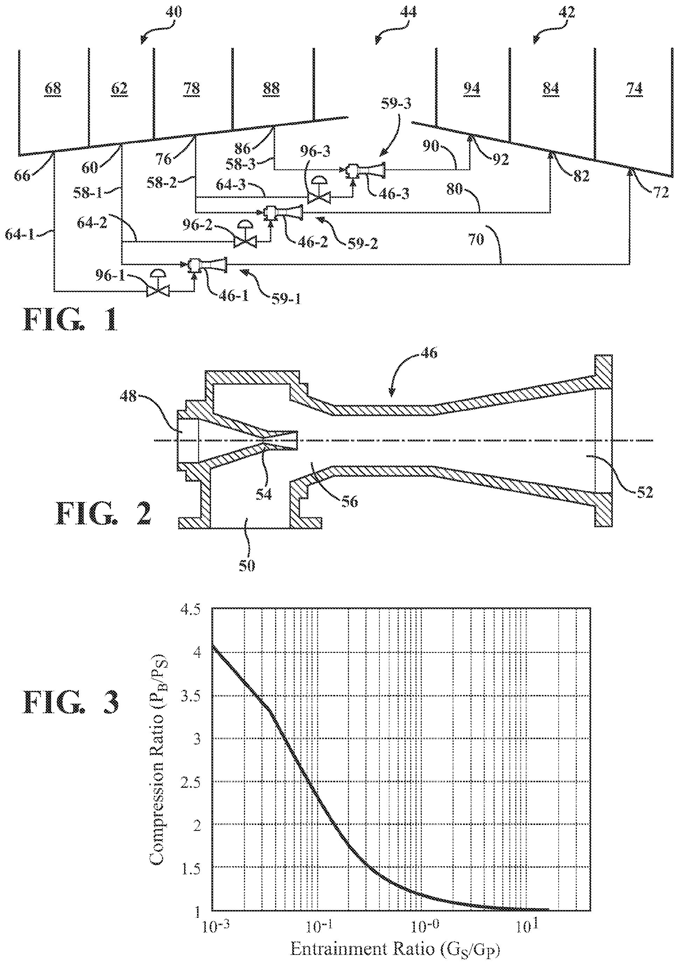

Referring to Fig. 1, a cooling system is illustrated diagrammatically, and comprises a system for providing cooling from a compressor 40 to plural stages of a turbine 42 in a gas turbine engine 44. In accordance with a general aspect of the invention, the cooling system incorporates a plurality of ejectors 46 for providing a controlled flow of air to each of a plurality stages in the turbine 42. Referring to Fig. 2, each ejector 46 has a primary fluid inlet 48, a secondary fluid inlet 50 and a diffuser outlet 52. As is described in greater detail below, each ejector 46 receives bleed air flows from the compressor 40 into the primary and secondary fluid inlets 48, 50 and mixes the bleed air flows which exit the diffuser outlet 52 as a cooling air flow to a respective turbine stage.

It may be understood that ejectors are conventional devices typically used to boost low pressure streams to higher, more usable pressures, thereby effectively utilizing available energy without waste. The primary fluid inlet 48 conveys a primary air flow to a primary or motive nozzle 54 where the primary air flow is accelerated, lowering its static pressure. A lower pressure secondary air flow passes through the secondary inlet 50 to a secondary or suction nozzle 56 of the ejector 46. The secondary flow is drawn toward the primary flow exiting the primary nozzle 54, and the two flows mix and are discharged through the diffuser outlet 52, resulting in deceleration and recovery of the static pressure of the exiting cooling air flow. The primary air flow provided to the primary inlet 48 comprises air extracted from the compressor 40 at a higher temperature than a lower temperature air extracted from the compressor 40 for the secondary air flow provided to the secondary inlet 50. The mixed flow exiting the diffuser 46 is therefore at an intermediate temperature that is lower than the temperature of the primary flow and higher than the temperature of the secondary flow.

As seen in Fig. 1, the cooling system includes first, second and third cooling circuits 59-1, 59-2 and 59-3 providing cooling air to successive fourth, third and second stages 74, 84 and 94, respectively, of the turbine 42, wherein it may be understood that the turbine stages are arranged in a conventional manner with the third stage 84 downstream from the second stage 94 and the fourth stage 74 downstream from the third stage 84. Additionally, it may be understood that the turbine includes a first stage (not shown) upstream of the second stage 94 and receiving cooling air through a cooling circuit (not shown) separate from the cooling system described herein.

The first cooling circuit 59-1 includes a first ejector 46-1 receiving a primary air flow through a first bleed air line 58-1 connected to a first bleed port 60 on the compressor 40. The first bleed port 60 is preferably an existing bleed location at a forward stage 62 of the compressor 40. The first ejector 46-1 receives a secondary air flow through an upstream lower pressure bleed line defining a first secondary air line 64-1 connected to an upstream port 66. The upstream port 66 can be an additional port 66, i.e., a port in addition to those that may be conventionally provided for supplying cooling air to the turbine stages, and can be provided at a front stage 68 of the compressor 40. The bleed air provided at the upstream port 66 is at a lower temperature and lower pressure than the temperature and pressure of the bleed air provided at the first bleed port 60. A cooling air flow exits the first ejector 46-1 through a first cooling air flow line 70 for conducting the cooling air to a port 72 associated with a stage of the turbine 42. In particular, the port 72 is associated with the fourth stage 74 of the turbine 42 and permits passage of cooling air to stationary vanes of the fourth stage 74.

The second cooling circuit 59-2 includes a second ejector 46-2 receiving a primary air flow through a second bleed air line 58-2 connected to a second bleed port 76 on the compressor 40. The second bleed port 76 is preferably an existing bleed location at a middle stage 78 of the compressor 40. The second ejector 46-2 receives a secondary air flow through a second secondary air line 64-2 connected to the first bleed air line 58-1. That is, the second secondary air line 64-2 receives a portion of the primary air flow from the first bleed port 60 at the forward stage 62 of the compressor 40. The secondary air provided from the first bleed air line 58-1 is at a lower temperature and lower pressure than the temperature and pressure of the bleed air provided at the second bleed port 76. A cooling air flow exits the second ejector 46-2 through a second cooling air flow line 80 for conducting the cooling air to a port 82 associated with another stage of the turbine 42. In particular, the port 82 is associated with the third stage 84 of the turbine 42 and permits passage of cooling air to components of the third stage 84. The components receiving cooling air in the third stage 84 may include only vanes or both vanes and blades, depending on the particular configuration of the engine.

The third cooling circuit 59-3 includes a third ejector 46-3 receiving a primary air flow through a third bleed air line 58-3 connected to a third bleed port 86 on the compressor 40. The third bleed port 86 is preferably an existing bleed location at a rear stage 88 of the compressor 40. The third ejector 46-3 receives a secondary air flow through a third secondary air line 64-3 connected to the second bleed air line 58-2. That is, the third secondary air line 64-3 receives a portion of the primary air flow from the second bleed port 76 at the middle stage 78 of the compressor 40. The secondary air provided from the second bleed air line 58-2 is at a lower temperature and lower pressure than the temperature and pressure of the bleed air provided at the third bleed port 86. A cooling air flow exits the third ejector 46-3 through a third cooling air flow line 90 for conducting the cooling air to a port 92 associated with a further stage of the turbine 42. In particular, the port 92 is associated with the second stage 94 of the turbine 42 and permits passage of cooling air to components of the second stage 94. The components receiving cooling air in the second stage 94 may include only vanes or both vanes and blades, depending on the particular configuration of the engine.

It should be understood that the above-described cooled components for the turbine stages 74, 84, 94 are provided for exemplary purposes, and are not intended to limit the described cooling system of the invention. As such, other components than those described herein for the turbine stages 74, 84, 94 may receive the cooling air from the first, second and third cooling circuits 59-1, 59-2, 59-3.

It may be noted that the first, second and third cooling circuits 59-1, 59-2, 59-3 can be provided as a replacement for existing cooling air circuits in a known turbine engine. For example the cooling circuits 59-1, 59-2, 59-3 can replace the cooling air bleeds 18, 22, 26 and associated modulation circuits 36 described above with reference to Fig. 4.

For each of the cooling circuits 59-1, 59-2, 59-3, the static pressure associated with each of the secondary air lines 64-1, 64-2, 64-3 can be lower than the static pressure at the respective ports 72, 82, 92 on the turbine 42. Hence, for each of the turbine ports 72, 82, 92 a lower temperature cooling air flow can be provided than would normally be available without implementation of the ejectors 46-1, 46-2, 46-3.

Further, in accordance with another aspect of the invention, control of the mass flow of the cooling air supplied to the turbine ports 72, 82, 92 through the cooling circuits 59-1, 59-2, 59-3 is performed without valves (i.e., unthrottled flows) in either the higher pressure bleed lines 58-1, 58-2, 58-3 or the cooling air flow lines 70, 80, 90. Rather, cooling air flow in each of the cooling circuits 59-1, 59-2, 59-3 can be modulated by valves 96-1, 96-2, 92-3 located in the respective secondary air lines 64-1, 64-2, 64-3, as seen in Fig. 1. It is preferable that the valves 96-1, 96-2, 92-3 be controlled to provide the required flow at a minimum temperature, meaning that the cooling air flow is produced with a minimum of the high pressure air from the bleed lines 58-1, 58-2, 58-3 and a maximum of the lower pressure air from the secondary air lines 64-1, 64-2, 64-3.

The primary air entering the primary inlet 48 of the injector 46 entrains the secondary air entering the secondary inlet 50 against the backpressure set by the pressure at a respective one of the turbine ports 72, 82, 92 and as determined by the vanes associated with these ports. More particularly, the entrainment ratio, G_{S}/G_{P}, is a function of compression ratio, P_{B}/P_{S}, where G_{S} is the mass flow rate at the secondary inlet 50; G_{P} is the mass flow rate at the primary inlet 48; P_{B} is the static pressure at the turbine port establishing a corresponding pressure at the outlet of the ejector 46; and P_{S} is the static pressure at the secondary inlet 50. The relationship between the entrainment ratio and the compression ratio is illustrated in Fig. 3, showing that a change in compression ratio can result in a relatively larger change in the entrainment ratio.

Since the valves 96-1, 96-2, 96-3 only control an entrained lower temperature secondary air flow, drawn in through the secondary fluid port 50 of each ejector 46-1, 46-2, 46-3, and are not located in the bleed lines 58-1, 58-2, 58-3 providing the motive pressure for the ejectors 46-1, 46-2, 46-3 or the main flow lines defined by the cooling air flow lines 70, 80, 90, losses associated with throttling a high pressure flow through valves are avoided. Hence, the flow control arrangement of the present cooling system results in an external bleed air supply to stages 72, 82, 92 of the turbine 42 which avoids or reduces a wasting of the energy expended by the compressor 40 in producing the bleed air.

The load on the engine can vary from a part load operation to a full or base load operation of the engine 44. The present cooling system is designed to provide sufficient cooling throughout the range of engine operation. For example, during a worst condition operation, conventionally characterized by operation at 60% load and a temperature of -20F with compressor inlet guide vanes and any compressor variable guide vanes closed, the cooling system is configured to operate with all of the valves 96-1, 96-2, 92-3 closed, such that all cooling air from the ejectors 46-1, 46-2, 46-3 to the cooling air flow lines 70, 80, 90 is supplied as primary air from the bleed lines 58-1, 58-2, 58-3. As the turbine operation moves away from worst condition operation, e.g., at higher power outputs and with increased available bleed air pressure, the valves 96-1, 96-2, 92-3 can be opened to provide a flow of lower temperature secondary air to be mixed with the primary air. The valves 96-1, 96-2, 92-3 can be modulated individually, i.e., operated independently of each other, to optimize the use of secondary air in each cooling circuit 59-1, 59-2, 59-3. As can be understood from the description above, the valves 96-1, 96-2, 92-3 can be modulated to maximize the mass flow rate of secondary air for the available compression ratio on each respective ejector 46-1, 46-2, 46-3 to provide all of the required flow control for the cooling circuits 59-1, 59-2, 59-3 throughout all operating conditions of the engine 44.

As described above, the present cooling system can decrease the temperature of the external bleed air to the turbine 42. Consequently, the amount of external bleed cooling air provided to the turbine components, e.g., to the turbine vanes, can be reduced. As a result of the combination of reduced compressor power required for producing cooling air and the reduced cooling air requirements, the present cooling system provides increased engine power and increased engine efficiency.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method of providing a cooling flow from a compressor to a turbine in a gas turbine engine, the method comprising the steps of:
providing a first cooling air flow from the compressor, through a first ejector, to a stage of the turbine;
providing a second cooling air flow from the compressor, through a second ejector, to another stage of the turbine;
providing a third cooling air flow from the compressor, through a third ejector, to a further stage of the turbine.
wherein:
the first ejector combines a first bleed air flow extracted from the compressor with a lower pressure air flow extracted from the compressor to form the first cooling air flow; and
the second ejector combines a second bleed air flow extracted from the compressor with a secondary portion extracted from the first bleed air flow to form the second cooling air flow.

2. The method of claim 1, wherein the third ejector combines a third bleed air flow extracted from the compressor with a secondary portion extracted from the second bleed air flow to form the third cooling air flow.

3. The method of claim 2, wherein the first, second and third bleed air flows are extracted from successive downstream locations on the compressor.

4. The method of claim 2, wherein the first, second and third cooling air flows are provided to successive upstream locations on the turbine.

5. The method of claim 2, wherein the first, second and third bleed air flows from the compressor to the first, second and third ejectors, respectively, are unthrottled flows throughout all operating conditions of the engine.

6. The method of claim 5, wherein the first, second and third cooling air flows from the respective first, second and third ejectors to the turbine are unthrottled flows throughout all operating conditions of the engine.

7. The method of claim 5, wherein the lower pressure air flow, the secondary portion extracted from the first bleed air flow and the secondary portion extracted from the second bleed air flow from the compressor to the first, second and third ejectors, respectively, are each variably throttled flows.

8. The method of claim 1, wherein the first and second bleed air flows from the compressor to the first and second ejectors, respectively, are unthrottled flows throughout all operating conditions of the engine.

9. The method of claim 8, wherein the first and second cooling air flows from the respective first and second ejectors to the turbine are unthrottled flows throughout all operating conditions of the engine.

## Patentansprüche

1. Verfahren zur Bereitstellung eines Kühlungsstroms von einem Verdichter für eine Turbine in einem Gasturbinenmotor, wobei das Verfahren die folgenden Schritte umfasst:
Bereitstellen eines ersten Kühlungsluftstroms von dem Verdichter durch einen ersten Ejektor für eine Stufe der Turbine;
Bereitstellen eines zweiten Kühlungsluftstroms von dem Verdichter durch einen zweiten Ejektor für eine andere Stufe der Turbine;
Bereitstellen eines dritten Kühlungsluftstroms von dem Verdichter durch einen dritten Ejektor für eine weitere Stufe der Turbine,
wobei:
der erste Ejektor einen dem Verdichter entnommenen ersten Zapfluftstrom mit einem dem Verdichter entnommenen Unterdruckluftstrom kombiniert, um den ersten Kühlungsluftstrom zu bilden; und
der zweite Ejektor einen dem Verdichter entnommenen zweiten Zapfluftstrom mit einem dem ersten Zapfluftstrom entnommenen Sekundärteil kombiniert, um den zweiten Kühlungsluftstrom zu bilden.

2. Verfahren nach Anspruch 1, wobei der dritte Ejektor einen dem Verdichter entnommenen dritten Zapfluftstrom mit einem dem zweiten Zapfluftstrom entnommenen Sekundärteil kombiniert, um den dritten Kühlungsluftstrom zu bilden.

3. Verfahren nach Anspruch 2, wobei der erste, der zweite und der dritte Zapfluftstrom aufeinander folgenden stromabwärtigen Stellen am Verdichter entnommen werden.

4. Verfahren nach Anspruch 2, wobei der erste, der zweite und der dritte Kühlungsluftstrom für aufeinander folgende stromaufwärtige Stellen an der Turbine bereitgestellt werden.

5. Verfahren nach Anspruch 2, wobei der erste, der zweite und der dritte Zapfluftstrom von dem Verdichter zu dem ersten, dem zweiten bzw. dem dritten Ejektor unter sämtlichen Betriebsbedingungen des Motors ungedrosselte Ströme sind.

6. Verfahren nach Anspruch 5, wobei der erste, der zweite und der dritte Kühlluftstrom von dem jeweiligen ersten, zweiten und dritten Ejektor zu der Turbine unter sämtlichen Betriebsbedingungen des Motors ungedrosselte Ströme sind.

7. Verfahren nach Anspruch 5, wobei der Unterdruckluftstrom, der dem ersten Zapfluftstrom entnommene Sekundärteil und der dem zweiten Zapfluftstrom von dem Verdichter entnommene Sekundärteil zu dem ersten, dem zweiten bzw. dem dritten Ejektor jeweils variabel gedrosselte Ströme sind.

8. Verfahren nach Anspruch 1, wobei der erste und der zweite Zapfluftstrom von dem Verdichter zu dem ersten bzw. zweiten Ejektor unter sämtlichen Betriebsbedingungen des Motors ungedrosselte Ströme sind.

9. Verfahren nach Anspruch 8, wobei der erste und der zweite Kühlungsluftstrom von dem jeweiligen ersten und zweiten Ejektor zur Turbine unter sämtlichen Betriebsbedingungen des Motors ungedrosselte Ströme sind.

## Revendications

1. Procédé destiné à fournir un flux de refroidissement provenant d'un compresseur à une turbine dans un moteur à turbine à gaz, le procédé comprenant les étapes suivantes :
fournir un premier flux d'air de refroidissement provenant du compresseur, à travers un premier éjecteur, jusqu'à un étage de la turbine ;
fournir un deuxième flux d'air de refroidissement provenant du compresseur, à travers un deuxième éjecteur, jusqu'à un autre étage de la turbine ;
fournir un troisième flux d'air de refroidissement provenant du compresseur, à travers un troisième éjecteur, jusqu'à un étage supplémentaire de la turbine, le premier éjecteur combinant un premier flux d'air de purge extrait du compresseur avec un flux d'air basse pression extrait du compresseur pour former le premier flux d'air de refroidissement ; et
le deuxième éjecteur combinant un deuxième flux d'air de purge extrait du compresseur avec une portion secondaire extraite du premier flux d'air de purge pour former le deuxième flux d'air de refroidissement.

2. Procédé selon la revendication 1, dans lequel le troisième éjecteur combine un troisième flux d'air de purge extrait du compresseur avec une portion secondaire extraite du deuxième flux d'air de purge pour former le troisième flux d'air de refroidissement.

3. Procédé selon la revendication 2, dans lequel le premier, deuxième et le troisième flux d'air de purge sont extraits d'emplacements successifs en aval sur le compresseur.

4. Procédé selon la revendication 2, dans lequel le premier, le deuxième et le troisième flux d'air de refroidissement sont prévus à des emplacements successifs en amont sur la turbine.

5. Procédé selon la revendication 2, dans lequel le premier, le deuxième et le troisième flux d'air de purge provenant du compresseur et allant aux premier, deuxième et troisième éjecteurs, respectivement, sont des flux non étranglés durant toutes les conditions de fonctionnement du moteur.

6. Procédé selon la revendication 5, dans lequel le premier, le deuxième et le troisième flux d'air de refroidissement provenant des premier, deuxième et troisième éjecteurs respectifs et allant à la turbine sont des flux non étranglés durant toutes les conditions de fonctionnement du moteur.

7. Procédé selon la revendication 5, dans lequel le flux d'air basse pression, la portion secondaire extraite du premier flux d'air de purge et la portion secondaire extraite du deuxième flux d'air de purge provenant du compresseur jusqu'aux premier, deuxième et troisième éjecteurs, respectivement, sont tous des flux étranglés de manière variable.

8. Procédé selon la revendication 1, dans lequel le premier et le deuxième flux d'air de purge provenant du compresseur et allant au premier et au deuxième éjecteur, respectivement, sont des flux non étranglés durant toutes les conditions de fonctionnement du moteur.

9. Procédé selon la revendication 8, dans lequel le premier et le deuxième flux d'air de refroidissement provenant des premier et deuxième éjecteurs respectifs et allant jusqu'à la turbine sont des flux non étranglés durant toutes les conditions de fonctionnement du moteur.
